# EUROPEAN PATENT SPECIFICATION

(11) **EP 1 296 396 B1**
(45) Date of publication and mention of the grant of the patent: **29.10.2008**
(21) Application number: 01122924.2
(22) Date of filing: 25.09.2001
(51) Int. Cl.: H01M 8/04

(54) **Method for operating a cooling system for a fuel cell and cooling system for a fuel cell**
Betriebsverfahren für ein Brennstoffzellen-Kühlungssystem und Kühlungssystem für Brennstoffzelle
Méthode de mise en oeuvre du système de refroidissement d'une pile à combustible et système de refroidissement d'une pile à combustible

(43) Date of publication of application: 26.03.2003
(73) Proprietor: NuCellSys GmbH, 73230 Kirchheim/Teck-Nabern (DE)
(72) Inventor: Blaszczyk, Janusz, Richmond, V7C 5R8 (CA)
(74) Representative: Kocher, Klaus-Peter

(56) References cited:
- WO-A-00/17951
- DATABASE WPI Section Ch, Week 200129 Derwent Publications Ltd., London, GB; Class E19, AN 2001-281677 XP002194736 & WO 01 23495 A (NIPPON CHEM KOGYO KK), 5 April 2001 (2001-04-05)

## Description

The invention relates to a method for operating a cooling system for a fuel cell and a fuel cell system in accordance with the preamble of the independent claims.

In fuel cell systems, e.g. such with a polymer electrolyte as ion exchange membrane, cooling of the fuel cell requires a virtually non-conducting cooling medium. Highly purified water or, in order to avoid freezing problems, mixtures of water and an alcohol have been proposed for this purpose.

The patent application JP A 07310070 considers a water/glycol mixture as fuel cell system coolant. A reverse osmosis membrane and an ion exchange resin unit are included in the cooling subsystem for purification of the coolant. However, the purification procedure requires a large filter volume. In fuel cell systems for vehicular application, however, volume and weight of components are costly and restricted. WO 00/17951 discloses the use of an ion exchange resin in the cooling circuit of a fuel cell.

The invention is based on the object of specifying a cooling circuit for a fuel cell system where the cooling circuit requires smaller filter volumes and a method for operating the same.

This object is achieved in the case of a cooling circuit operated by a method having the features of Claim 1.

The invention allows to reduce the size of the filter needed to purify the coolant to be strongly reduced. The coolant applied is compatible to metals as aluminium and is less corrosive than regular water/alcohol mixtures against metallic materials. It can be easily stored and refilled.

Further advantages and refinements of the invention emerge from the rest of the claims and the description.

The invention can be advantageously used in vehicles where a fuel cell system is used to supply electric energy for traction and/or low power requirements.

Preferably, a water/alcohol mixture is used as coolant for a fuel cell system, e.g. The fuel cell stack, where the alcohol is a higher alcohol such as glycol. The coolant circulates in the stack cooling circuit and is filtered by a ion exchange filter unit arranged in the circuit to meet the electric insulation requirements for the coolant. The ion exchange filter unit may be equipped with a particle filter to remove particles from the coolants prior to entering the filter itself.

According to the invention a conditioning process is performed before the coolant is filled into the cooling circuit. In this conditioning process a freshly prepared water/alcohol mixture is brought into contact with a metal compartment. The freshly prepared mixture has been found to be highly reactive. Highly electrical conductive reaction products are formed until all reactive mixture components have reacted. These highly electrical conductive components have to be removed from the mixture. Therefore, during the conditioning process the coolant is filtered to remove these reaction components. Once the mixture shows the required purity, e.g. electric conductivity, the conditioning process has been successfully completed.

The required purity can be verified by reading appropriate sensors, e.g. a conductivity sensor. The pre-conditioned coolant can now be transferred to the cooling circuit. The pre-conditioned coolant can even be stored for considerable time in a storage tank before being transferred to the cooling circuit.

The cooling circuit containing the pre-conditioned coolant requires a much smaller filter unit than for a coolant without conditioning process to maintain the required coolant electric conductivity. Once the coolant is passivated the corrosion of metal components, e.g. aluminum, being in contact with the coolant in the cooling circuit is strongly reduced. Therefore the filter has to remove much less impurities.

A preferred coolant is a water/glycol mixture. During the conditioning process the freshly mixed coolant is circulated through a reactor filled with bare metallic material, preferably aluminum material. It is found that especially in contact with aluminum material the water/glycol mixture forms reaction products such as glycolic acid which is a highly electric conducting material. The formation of the highly conducting species stops as soon as all active water/glycol mixture compounds have reacted. The water/glycol mixture is filtered when circulating in the conditioning plant by a fairly large ion exchange filter. As soon as the formation of highly electric conductive components has stopped as all active water/glycol mixture have reacted, the electric conductivity of the water/glycol mixture starts to decrease until the required purity of the mixture is achieved. Now the water/glycol mixture is passive and electrically insulating as it is in its pre-conditioned state and can be transferred to the cooling circuit. Advantageously, the conditioning process is terminated if the electric conductivity of the coolant drops below a critical value. For fuel cell stack cooling a low conductivity is required which is well below 10 µS/cm.

Favourably only pre-conditioned coolant is used for the fill-ups of the cooling circuit of the fuel cell. As for a preferred water/glycol coolant conditioned according to the invention, the regular filter of roughly 20 litre volume can be replaced by a filter with roughly 1 litre volume.

Besides the reduction of the filter volume advantageously the weight of the cooling circuit including the filter unit is decreased. The fuel cell engine reliability is increased as no sudden electric conductivity increase occurs after a fresh glycol is added to the coolant. Additionally, the maintenance is facilitated as only a small filter unit has to be changed in case a filter change has to be performed.

A suitable fuel cell system is a reformate system which comprises a fuel cell stack, a gas production system for producing hydrogen from a carbon hydrate or a hydrogen compound, which hydrogen is fed into the anode side of the fuel cell stack, an oxygen section which oxygen is fed to the cathode side of the fuel cell stack and a fuel cell exhaust section, which fuel cell exhaust is used to heat and/or cool components of the gas production system. Details of the fuel cell systems are well known to persons skilled in the art of fuel cell systems. The pre-conditioned coolant can favourably be applied not only to the fuel cell stack but also to other cooling circuits in the fuel cell system.

Another suitable fuel cell system is a system without reformate where the fuel is hydrogen of another medium which can be directly fed into the fuel cell stack. The pre-conditioned coolant can favourably be applied not only to the fuel cell stack but also to other cooling circuits in the fuel cell system.

## Claims

1. A method for operating a cooling circuit of a fuel cell system, the fuel cell system comprising a cooling circuit for cooling a fuel cell stack, a coolant circulating in said cooling circuit, a filter unit arranged in the cooling circuit for purifying said coolant,
**characterized in**
**that** prior to feeding said coolant to said cooling circuit a pre-conditioned coolant is prepared from a freshly prepared coolant, whereby the freshly prepared coolant is chemically passivated to form said pre-conditioned coolant.

2. A method according to Claim 1,
**characterized in that** reaction products formed in the coolant while being passivated are removed from the coolant.

3. A method according to Claim 1,
**characterized in that** the state of conditioning of the coolant is controlled by a sensor signal.

4. A method according to Claim 3,
**characterized in that** the state of conditioning of the coolant is controlled by sensing the electric conductivity of the coolant.

5. A method according to Claim 4,
**characterized in that** the conditioning process is terminated if the electric conductivity drops below a critical value.

6. A method according to Claim 2,
**characterized in that** the freshly prepared coolant is circulating through a reactor chamber filled with a metal material thus forming the reaction product from active components of the coolant and the metal material.

7. A method according to Claim 6,
**characterized in that** said metal comprises aluminum.

8. A method according to Claim 6,
**characterized in that** said reaction products are subsequently removed from the coolant while circulating through said reaction chamber.

9. A method according to Claim 1,
**characterized in that** said coolant is a mixture of water and alcohol.

10. A method according to Claim 9,
**characterized in that** said alcohol is glycol.

11. A method according to Claim 1,
**characterized in that** fill-up of coolant in the cooling circuit is performed by using said pre-conditioned coolant.

12. A cooling system for a fuel cell system with a cooling circuit circulating a pre-conditioned coolant according to one of the Claims 1-11.

## Patentansprüche

1. Betriebsverfahren für einen Kühlkreislauf eines Brennstoffzellensystems, wobei das Brennstoffzellensystem einen Kühlkreislauf zum Kühlen eines Brennstoffzellenstapels, ein in dem Kühlkreislauf zirkulierendes Kühlmittel und eine in dem Kühlkreislauf angeordnete Filtereinheit zur Reinigung des Kühlmittels umfasst,
**dadurch gekennzeichnet, dass**
vor dem Zuführen des Kühlmittels zum Kühlkreislauf ein vorkonditioniertes Kühlmittel aus frisch zubereitetem Kühlmittel hergestellt wird, wodurch das frisch zubereitete Kühlmittel chemisch passiviert ist, um das vorkonditionierte Kühlmittel zu bilden.

2. Verfahren nach Anspruch 1,
**dadurch gekennzeichnet, dass** während des Passivierens in dem Kühlmittel erzeugte Reaktionsprodukte aus dem Kühlmittel entfernt werden.

3. Verfahren nach Anspruch 1,
**dadurch gekennzeichnet, dass** der Konditionierzustand des Kühlmittels durch ein Sensorsignal gesteuert wird.

4. Verfahren nach Anspruch 3,
**dadurch gekennzeichnet, dass** der Konditionierzustand des Kühlmittels durch Erfassen der elektrischen Leitfähigkeit des Kühlmittels gesteuert wird.

5. Verfahren nach Anspruch 4,
**dadurch gekennzeichnet, dass** der Konditionierprozess beendet wird, wenn die elektrische Leitfähigkeit unter einen kritischen Wert fällt.

6. Verfahren nach Anspruch 2,
**dadurch gekennzeichnet, dass** das frisch zubereitete Kühlmittel durch eine mit einem Metallmaterial gefüllte Reaktionskammer zirkuliert wird, wodurch das Reaktionsprodukt von den aktiven Komponenten des Kühlmittels und dem Metallmaterial gebildet wird.

7. Verfahren nach Anspruch 6,
**dadurch gekennzeichnet, dass** das Metall Aluminium umfasst.

8. Verfahren nach Anspruch 6,
**dadurch gekennzeichnet, dass** die Reaktionsprodukte anschließend beim Zirkulieren durch die Reaktionskammer aus dem Kühlmittel entfernt werden.

9. Verfahren nach Anspruch 1,
**dadurch gekennzeichnet, dass** das Kühlmittel ein Gemisch aus Wasser und Alkohol ist.

10. Verfahren nach Anspruch 9,
**dadurch gekennzeichnet, dass** der Alkohol Glykol ist.

11. Verfahren nach Anspruch 1,
**dadurch gekennzeichnet, dass** das Nachfüllen von Kühlmittel im Kühlkreislauf durch Verwendung des vorkonditionierten Kühlmittels erfolgt.

12. Kühlsystem für ein Brennstoffzellensystem mit einem ein vorkonditioniertes Kühlmittel nach einem der Anprüche 1 - 11 zirkulierenden Kühlreislauf.

## Revendications

1. Procédé pour la mise en oeuvre d'un circuit de refroidissement d'un système de pile à combustible, le système de pile à combustible comprenant un circuit de refroidissement servant au refroidissement d'un bloc de la pile à combustible, un liquide de refroidissement circulant dans ledit circuit de refroidissement, une unité de filtre agencée dans le circuit de refroidissement pour purifier ledit liquide de refroidissement,
**caractérisé en ce que**
préalablement à ce que ledit liquide de refroidissement soit alimenté dans ledit circuit de refroidissement un liquide de refroidissement préconditionné est préparé à partir d'un liquide de refroidissement préparé fraîchement, où le liquide de refroidissement préparé fraîchement est passivé chimiquement pour former ledit liquide de refroidissement préconditionné.

2. Procédé selon la revendication 1,
**caractérisé en ce que** les produits de réaction formés dans le liquide de refroidissement pendant sa passivation sont retirés du liquide de refroidissement.

3. Procédé selon la revendication 1,
**caractérisé en ce que** l'état de conditionnement du liquide de refroidissement est commandé par la voie du signal provenant d'un capteur.

4. Procédé selon la revendication 3,
**caractérisé en ce que** l'état de conditionnement du liquide de refroidissement est commandé en détectant la conductivité électrique du liquide de refroidissement.

5. Procédé selon la revendication 4,
**caractérisé en ce que** le procédé de conditionnement est arrêté si la conductivité électrique baisse au-dessous d'une valeur critique.

6. Procédé selon la revendication 2,
**caractérisé en ce que** le liquide de refroidissement préparé fraîchement circule à travers une chambre de réacteur remplie d'un matériau en métal formant de la sorte le produit de réaction des composants actifs du liquide de refroidissement et du matériau en métal.

7. Procédé selon la revendication 6,
**caractérisé en ce que** ledit métal comprend l'aluminium.

8. Procédé selon la revendication 6,
**caractérisé en ce que** lesdits produits de réaction sont ensuite retirés du liquide de refroidissement pendant sa circulation à travers ladite chambre de réaction.

9. Procédé selon la revendication 1,
**caractérisé en ce que** ledit liquide de refroidissement est un mélange d'eau et d'alcool.

10. Procédé selon la revendication 9,
**caractérisé en ce que** ledit alcool est le glycol.

11. Procédé selon la revendication 1,
**caractérisé en ce que** le remplissage du circuit de refroidissement en liquide de refroidissement est effectuée en utilisant ledit liquide de refroidissement préconditionné.

12. Système de refroidissement d'un système de pile à combustile comprenant un circuit de refroidissement dans lequel circule un liquide de refroidissement préconditionné selon l'une quelconque des revendications 1 à 11.
